Europäisches Patentamt

European Patent Office

Office européen des brevets

(19)

(11) Publication number: **0 087 817**

**A1**

## (12) EUROPEAN PATENT APPLICATION

(21) Application number: **83102034.2**

(22) Date of filing: **02.03.83**

(51) Int. Cl.³: **B 29 D 27/02**

(30) Priority: 03.03.82 US 354404
25.02.83 US 468230

(43) Date of publication of application:
07.09.83 Bulletin 83/36

(84) Designated Contracting States:
AT BE CH DE FR GB IT LI LU NL SE

(71) Applicant: Castle & Cooke Techniculture, Inc.
P.O. Box 3680 635 South Sanborn Road
Salinas California(US)

(72) Inventor: Hermann, Paul Francis
Kennyfield Drive
Booth Harbor Maine(US)

(72) Inventor: Kennedy, Thornburn Scott
Meadow Cove Road
East Booth Bay Maine(US)

(72) Inventor: Smith, Arthur Laslett
Barter's Island
Trevett Maine(US)

(74) Representative: Dipl.-Phys.Dr. Manitz Dipl.-Ing.
Finsterwald Dipl.-Ing. Grämkow Dipl.-Chem.Dr. Heyn
Dipl.-Phys.Rotermund Morgan B.Sc.(Phys.)
Robert-Koch-Strasse 1
D-8000 München 22(DE)

(54) Continuous polymer process apparatus and system.

(57) A continuous polymerization process, apparatus and system is disclosed for producing low molecular weight polymers. Reactants, preferably polyethylene glycol (hereinafter PEG) and tolylene diisocyanate (hereinafter TDI), are combined in an intimately radially mixed single flowing stream, in a jacketed conduit with in-line mixers. Thorough radial mixing occurs in the conduit to produce a plug-shaped velocity flow profile across the conduit cross-section. There results a precisely controllable dwell time and thermal history which gives a product of high reproducibility. Moving parts are eliminated and the reactants only need be introduced together at one point along the entire reacting path. End product is obtained in approximately one-third of the heretofore known reaction time.

./...

FIG._1.

9101-11-1/CCCCC1

## CONTINUOUS POLYMER PROCESS APPARATUS AND SYSTEM

This application is a continuation-in-part of application Serial No. 354,404, filed March 3, 1982.

This invention relates to a continuous polymerization process. In broad terms, this invention relates to an apparatus, process, and system for application to polymerizable reactants in general, particularly to the formation of urethane.

In a preferred embodiment, this invention relates to the controlled continuous reaction of poly(oxyalkylene) polyols with organic diisocyanates to produce a high viscosity intermediate polymer for subsequent further polymerization to form polyurethane end products in both foaming and non-foaming applications. In a particularly preferred use, the end product is hydrously foamed and supplemented with fillers in massive amounts containing water without affecting the formation of the foam. Products, particularly when urethane foam is used, can then be manufactured at lower cost to satisfy applications in a variety of areas, for example: abrasive polishing cloth, detergent-filled sponges, sponges filled with volatiles such as fragrances or medicants, automobile seat cushions, sound absorbing ear plugs or soil retaining plugs now used with certain agricultural transplanting techniques (for the latter see Kistner U.S. Patent 3,805,532, entitled "Consolidation of Aggregate Material" issued April 23, 1974).

A serious problem in the production of such prepolymers is the effect of reaction conditions, notably the thermal history, on the nature of the product. In polyurethane formation, for example, inadequate cr improper temperature control can result in a product viscosity which is either too high or too low. Known methods of avoiding this include limiting the reaction temperature to a maximum of 200°F and using a stirred tank reactor in a batch process. A reaction time of up to 20 hours is required to produce an acceptable product under these conditions. See Wood et al., U.S. Patent No. 4,137,200 (January 30, 1979), which further calls for the addition of polyfunctional glycol to obtain the desired viscosity increase.

Continuous processing of urethane foam prepolymers is disclosed by J. R. Wall in an article entitled "Continuous Processing of Urethane Foam Prepolymers" Chemical Engineering Progress (Vol. 57, No. 10), October 1961. In the process disclosed therein, the reaction occurs in large rotating batch mixers and cookers. Typically, the diisocyanate is mixed with a first portion of polyol, and the mixture is heated in a scraped surface mixing heat exchanger. The reaction mixture is then passed to a stirred reactor. Upon exit, a second portion of diisocyanate is added and the mixture passes to a second scraped surface mixing heat exchanger for further reaction. The reference cautions against adding all of the diisocyanate in one location. Apparently, addition of the diisocyanate in one location in the continuous flow stream will result in all the hydroxyl groups being capped off quickly. A low viscosity prepolymer results which will not foam adequately when water is introduced. The reference further discloses combining the polyol and diisocyanate in a blender with a residence time of approximately twenty minutes. While this was a considerable improvement over the twenty-hour batch polymerization, the process hereinafter disclosed offers a further improvement by reducing the residence time even more.

## SUMMARY OF THE INVENTION

A continuous polymerization process, apparatus and system are disclosed for producing urethane polymers. Reactants, preferably a poly(oxyalkylene) polyol and an organic diisocyanate, are combined in a jacketed conduit to form an intimately mixed single flowing stream. The jacket contains a heat transfer medium maintained at constant temperature, and the conduit contains mixing means to produce a plug-shaped velocity profile over the cross-section of the conduit. Mixing is readily accomplished by in-line motionless mixers which ensure a reduced film coefficient and a precisely controlled residence time and thermal history, resulting in a product of high reproducibility. Moving parts are eliminated and the reactants need only be introduced at one point along the reacting path. End product is obtained in approximately one-third of the heretofore known reaction time.

## OTHER OBJECTS, FEATURES AND ADVANTAGES OF THE INVENTION

According to the present invention, the metered reactants are passed to a continuously moving stream having in-line mixers and an initial heat exchanger for heating the passing reactants to preferred temperature of approximately 400°F. Thereafter, and with a total residence time on the order of approximately 90 seconds, the reacting and intermixed reactants are passed along a serpentine path containing the in-line mixers in a total path length of approximately fourteen feet. Complete intermixture of the reactants at all phases of the reaction with a plug flow velocity profile occurs.

Motionless mixers are preferred. An example of such a device which is effective for use in the present invention is the Static Mixer®, a product obtainable from Kenics Corporation, Danvers, Massachusetts. The number and placement of such devices along the reaction path will be such as to provide substantially uniform mixing throughout the entire course of the reaction. In a preferred embodiment, these devices occupy the entire reaction path.

A unique feature of the present invention is that it permits a controlled reaction at a considerably higher temperature than processes of the prior art. The temperature can vary over a wide range, depending on the reactants used and the nature of the reaction. Generally, the temperature in the reaction zone will fall within the range of about 300°F to about 600°F, preferably from about 350°F to about 500°F.

The internal diameter of the conduit serving as the reaction zone will likewise vary depending upon the reactants used and the nature of the reaction. For a given system, the conduit diameter will be appropriately selected to provide the desired degree of temperature control and yet permit a reasonable flow rate. In preferred applications, the diameter will range from about 1/8 inch to about 3 inches.

Poly(oxyalkylene) polyols useful in the present invention include those having a molecular weight within the range of about 500 to about 3000 daltons, preferably about 750 to about 2000 daltons. The polyols can be diols, triols, or tetrols. Examples are poly(ethylenoxy) diol, poly(propyleneoxy) diol, poly(butyleneoxy) diol, copoly(ethyleneoxy-propyleneoxy) diol, poly(ethyleneoxy) triol, poly(ethyleneoxy) tetrol, poly(propyleneoxy) triol, copoly(ethyleneoxy-propyleneoxy) triol, and copoly(ethyleneoxy-butyleneoxy) triol. Poly(ethyleneoxy) diol, or polyethylene glycol ("PEG"), with a molecular weight of about 1000 to about 1500 daltons is preferred. Short chain synthetic diols, such as TMPD(2,2,4-trimethyl-1,3-pentanediol), neopentylglycol (dimethyl-1,3-propanediol), propylene glycol or ethylene glycol, may also be added to impart certain specific characteristics to the end product.

Organic diisocyanates useful in the present invention include those well known in the art. Examples are toluene diisocyanate, phenylene diisocyanate, hexamethylene diisocyanate, isophorone diisocyanate, methylene bis(4-phenylisocyanate), 4,4'-methylenebis-(o-tolylene isocyanate), dimer acid diisocyanate, 2,2,4-trimethylpentane diisocyanate, and aniline-formaldehyde polyisocyanates. Tolylene diisocyanate ("TDI") is preferred.

The process and apparatus of the present invention are useful in the formation of urethane polymers in general. Examples include:

urethanes in combination with polypropylene glycols urethanes in combination with glycol mixtures elastomeric formulations cellular formulations one-shot systems quasi prepolymers reaction injection molding resins coatings, adhesives, and sealants.

Unlike the prior art (Wall, _supra_), the present invention avoids the need to add the diisocyanate at two discrete points in the reacting path. Heretofore, addition of all required diisocyanate at one point in the continuous reacting stream had resulted in all the hydroxyl groups being quickly "capped off". A low viscosity prepolymer was obtained. This low viscosity polymer did not foam correctly. By use of the apparatus or process of the present invention, the diisocyanate need only be added at the initial point. The flow conduit and in-line mixers herein disclosed avoid the need for separate and spaced apart injections of the diisocyanate, yet still provide a high degree of control over the thermal history of the reaction. Control of the thermal history is a particularly advantageous aspect of the invention, since it relates directly to the product viscosity, which is one of the most important factors in subsequent foam processing. Optional variations can be introduced into the basic process to further modify the viscosity or structure of the product. An example of one such variation is the secondary injection of short chain diols.

Products obtained by the process of the present invention are distinct from those of the prior art and unattainable by prior art processes. The products herein obtained have a higher number of available cross-linking sites due to the process operating temperatures, which exceed those of the prior art by about 200°F. Furthermore, products of the desired viscosity level are achievable without the addition of a polyfunctional glycol.

An advantage of this invention is that the reaction is precisely reproducible. The plug flow velocity profile and thermal history of all molecules passing along the reacting path are precisely reproducible. Radial mixing occurs to give an even temperature gradient across the diameter of the reacting path. Back mixing is minimized.

A further advantage of this invention is that the jacketed conduit configuration permits a high degree of control over the maximum reaction temperature. Once the reactants are heated to an optimum temperature for initiation of the reaction, the temperature of the reaction mixture continues to rise due to the exothermic nature of the reaction. A heat transfer medium in the jacket surrounding the reaction conduit causes a thermal peak to form along the reaction path. By adjustments to operating and design parameters such as the flow rate, jacket temperature, conduit diameter, etc., one can control and maintain the location and height of the thermal peak and obtain a high degree of reproducibility.

A further advantage of this invention is that a uniform polymer product is obtained in approximately one-third the reaction time.

Yet another advantage of this invention is that polymer for foaming can now be made adjacent virtually any site where required. Storage and shipment of produced prepolymer for long periods of time is not required. Moreover, dilution of the prepolymer with diluents, such as acetone and the like for preservation and handling is not required. Instead, manufacture of the polymer from relatively low cost constituent on the site of usage can occur.

A final advantage of this system is that process shut down occurs with minimal waste. The produced precise plug shaped velocity profile enables process shut down with a small fraction of the waste encountered in previous continuous processes.

Other objects, features and advantages will become more apparent after referring to the following specification and attached drawings in which:

Fig. 1 is a flow diagram of the apparatus according to this invention;

Fig. 2 is an illustration of a typical static mixer utilized with the preferred one inch reacting pipe of this invention; and

Fig. 3a - 3f is a cartoon series taking sections of the static mixers illustrating the required intermixing of the reactants.

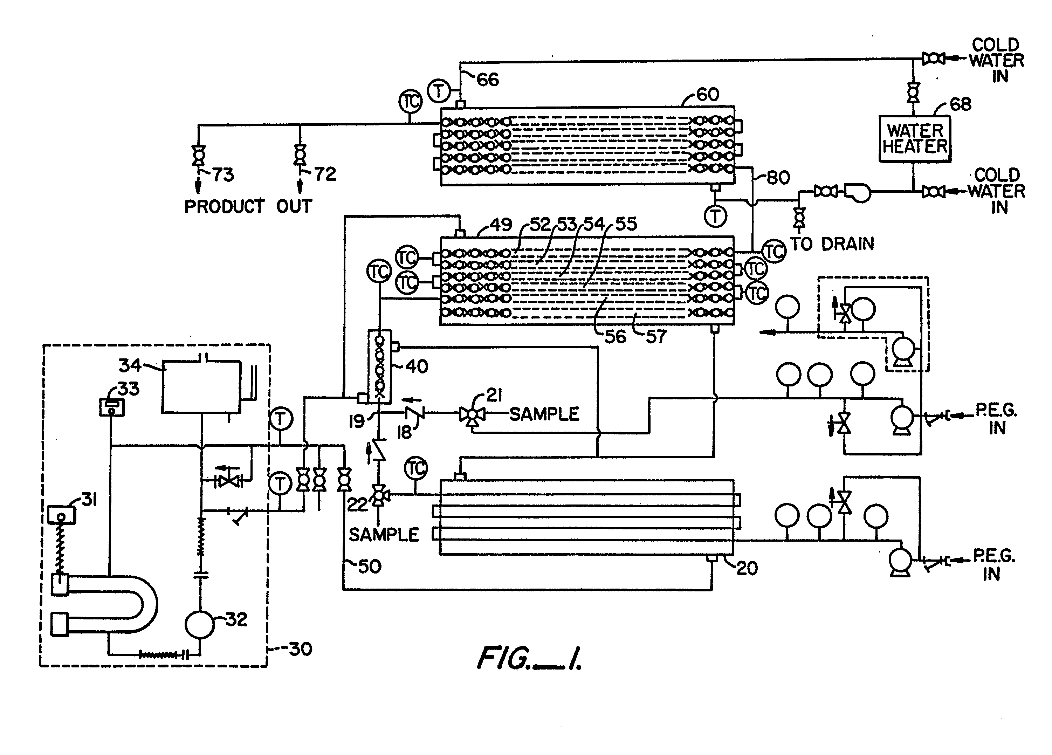

Referring to Fig. 1, TDI is introduced through metering pump 16 and checkvalve 18 to mix point 19. PEG is introduced through metering pump 17 to a heat exchanger 20 to point of mixture 19. The metering pumps control the flow so that, for example, 20 gallons per hour total flow is maintained with a ratio of 351 parts TDI to 1000 parts PEG. The exact flow rates can be tested or product sampled through valves 21 or 22. Flow rates can be varied as hereinafter described.

PEG flowing through preheater 20 is raised in temperature to approximately 400°F. TDI is maintained at room temperature up to mixing point 19. TDI and PEG are then combined and flow through admixer 40 and isothermal reactor 49.

The heat exchange fluid used in items 20, 40, and 49 is conventionally heated in an oil heater 30 having an overtemperature control 31, circulation pump 32, temperature control 33, and an expansion tank 34. A heat exchange fluid, such as "Dowtherm®", a product of Dow Chemical Co. of Wilmington, Delaware, is a typical example. The temperature control is set so that an overall oil temperature at point 50 is approximately 425°F. The reactants pumped at a combined rate of 20 gal/hour through reactor 49 flow through a plurality of static mixers 52, 53, 54, 55, 56, and 57.

From the isothermal reactor the reactants flow through a cooler 60 also fitted with a plurality of static mixers. Either cold water from tap or hot water provided by heater 68 and its pump can be circulated through the cooler.

Upon leaving the cooler, the reaction mixture flows to the product exit valves 72 and 73 into receptacles (not shown).

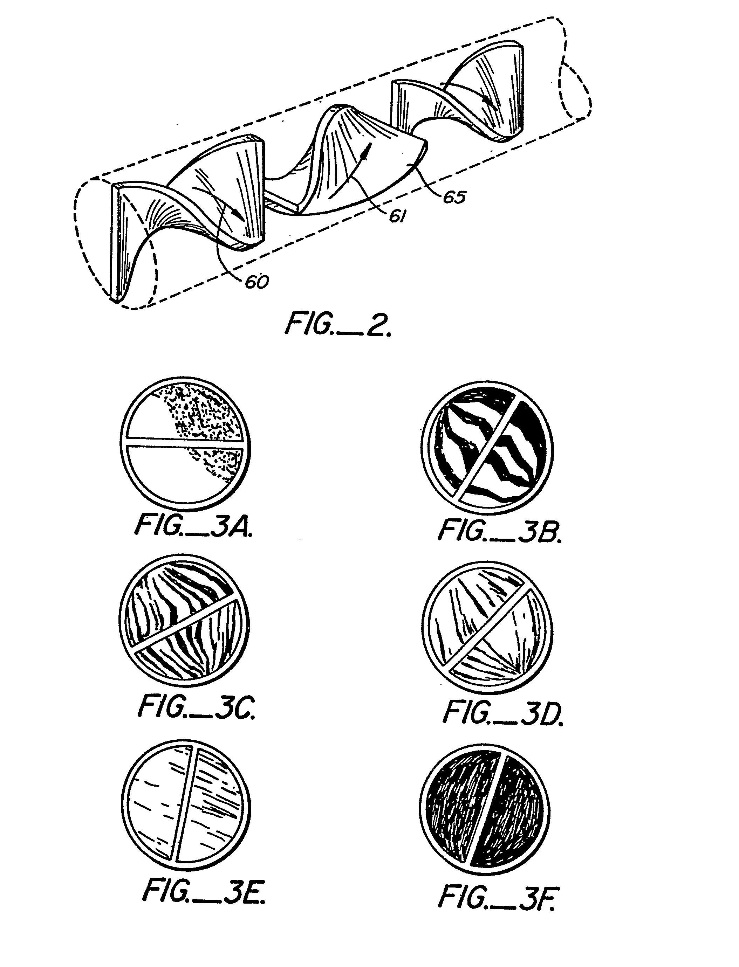

Referring to Fig. 2, it can be seen that the static mixers consist of curved metallic planes 60. The direction of the curve of a first plane 61 is opposite that of an adjacent plane 65. Such static mixers are known. Specifically, they are a product of the Kenics Corporation of Danvers, Mass. A complete description of such static mixers may be found in U.S. Patents 3,286,992 entitled "Mixing Device" to C.D. Armeniades, W. C. Johnson and T.R. Winchester issued Nov. 22, 1966; and U.S. Patent 3,704,006 entitled "Dispersion Producing Method" to K.M. Grout, R.D. Devellian on Nov. 28, 1972. Fig. 3a - 3f are illustrations of the required intermixing assuming an initial reactant interface.

Purging of the system upon shutdown is readily and conveniently accomplished by running PEG through the system without TDI. The plug flow created by the static mixers provides complete flushing as well as precise and predictable termination of the reaction. In the arrangement shown, the TDI pump 16 is simply shut down when the system is ready for purging, and the exit lines 72 or 73 are directed to waste. Since PEG tends to solidify at room temperature, the coolant in heat exchanger 60 is replaced by heated water from water heater 68 to prevent flow obstructions. For similar reasons, the PEG in the process lines after a shutdown period must be reheated prior to start-up.

The flow rate and respective temperatures encountered within the apparatus herein disclosed can now be discussed.

The flow rate, temperature, and other system parameters can be adjusted according to the product specifications sought. One-shot processes, for example, can be polymerized by the inclusion of additional pumps to supply such further system components as catalysts, chain extenders, and surfactants. The residence time is readily adjusted by modifications in reactor diameter and length while still maintaining linear velocity and the resultant shear rate.

The flow rate is adjustable and can vary over a wide range. In most applications, a flow rate which will maintain a perceptible thermal peak within the reactor is sought. Flow rates ranging from 15 gallons per hour to 22 gallons per hour are preferred, since they result in a perceptible thermal peak when used in the preferred configuration described herein.

In a system with a total flow rate of 20 gallons per hour, PEG is introduced to the loop in the vicinity of valve 22 at a temperature in the range of 405°F. The TDI is introduced through valve 21 at ambient temperature.  The two are mixed and heated in admixer 40, provided with cocurrent heat exchange fluid.

The reaction mixture then enters the isothermal reactor 49 where the entrance temperature is 380°F. The reaction mixture reaches a peak temperature of 447°F within the reactor, then exits at 410°F.  By adjustment of the flow rate, the Dowtherm temperature, the reactor diameter, or the reactor length, the location of the thermal peak can be moved along the length of the reactor.  By controlling the peak position, one can fix the thermal history of the reaction mixture and thereby enhance the uniformity of the product.

In general, the reactor conduit diameter is sized to produce a flow rate and thermal history as desired, depending upon the particular reactants used. The mixers provide a plug-shaped velocity profile, uniform residence time distribution, reduction in inside film coefficient, minimum fouling, and low pressure drop.

The product mixture finally passes through the cooler 60 for quenching of the reaction.  The mixture typically enters the cooler at 410°F and exits into storage at 120°F.  A residence time of approximately 60 seconds will significantly minimize the viscosity build-up and NCO drop.  In the prior art batch processes, these effects continue to occur after the reaction is complete, while the product cools.

The reader will note that the serpentine path herein disclosed is enclosed within isothermal reactor 49.  This serpentine path in effect comprises a heat exchanger.  Heat from the exothermic reaction is passed to the Dowtherm within.  In the embodiment that we have built, a cabinet with controlled temperature has been built to enclose the serpentine type path with the temperature monitored to be in the range of 450°F. While reactions can be carried on with differing chemicals for differing polymer products, the point we stress is the apparatus herein disclosed gives very precisely controllable points along the path. This has not been achieved in with this degree of predictability in the prior art.

WHAT IS CLAIMED IS:

1.    Apparatus for the continuous polymerization of reactants, comprising:

means for metering said reactants to produce a predetermined combined flow rate,

a jacketed conduit for receiving said reactants with a constant temperature heat transfer medium within said jacket, said conduit extending a sufficient distance to permit the reaction to go to completion therein, and

means within said conduit for mixing said reactants to provide a plug-shaped velocity profile and radial mixing of said reactants.

2.    The apparatus of claim 1 further comprising a heat exchanger downstream of said conduit for cooling the product stream emerging therefrom.

3.    The apparatus of claim 2 wherein said heat exchanger contains means for mixing said product stream to substantially reduce the inside film coefficient and provide a substantially constant radial temperature profile.

4.    The apparatus of claim 1 wherein said conduit has an inner diameter of from about 1/8 inch to about 3 inches.

5.    A process for the continuous polymerization of polymerizable reactants comprising:

combining said reactants in a jacketed conduit of which said jacket contains a constant temperature heat transfer medium, said conduit is of sufficient length to complete said polymerization, and said conduit contains means for mixing said reactants to maintain therein a substantially homogeneous reaction mixture and a plug-shaped velocity profile, and

recovering the product of said polymerization from the exit of said conduit.

6. The process of claim 4 in which the temperature within said conduit ranges from about 300°F to about 600°F.

7. The process of claim 4 in which the temperature within said conduit ranges from about 350°F to about 500°F.

8. The process of claim 4 in which said polymerizable reactants are a poly(oxyalkylene) polyol having a molecular weight of from about 500 to about 3000 daltons and an organic diisocyanate.

9. The process of claim 8 in which said poly(oxyalkylene) polyol has a molecular weight of from about 750 to about 2000 daltons.

10. The process of claim 8 in which said poly(oxyalkylene) polyol is polyethylene glycol with a molecular weight of from about 1000 to about 1500 daltons, and said organic diisocyanate is tolylene diisocyanate.

11. The process of claim 8 in which said conduit is a pipe of internal diameter ranging from about 1/8 inch to about 3 inches.

12. The process of claim 8 in which said reaction has a residence time of approximately 90 seconds.

FIG.__1.

FIG.__2.

FIG.__3A.

FIG.__3B.

FIG.__3C.

FIG.__3D.

FIG.__3E.

FIG.__3F.

## EUROPEAN SEARCH REPORT

European Patent Office

Application number

EP 83102034.2

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US - A - 3 769 232 (HOULDRIDGE) <br> * Totality * <br> -- | 1 | B 29 D 27/02 |
| A | US - A - 3 976 230 (SPERRY) <br> * Totality * <br> -- | | |
| A,D | US - A - 3 286 992 (ARMENIADES) <br> * Totality * <br> -- | | |
| A,D | US - A - 3 704 006 (GROUT) <br> * Totality * <br> -- | | |
| A,D | US - A - 4 137 200 (WOOD) <br> * Totality * <br> ---- | | |

|  |  |
|---|---|
| | TECHNICAL FIELDS SEARCHED (Int. Cl. ³) |
| | B 01 F 5/00 <br> B 29 B 1/00 <br> B 29 D 27/00 <br> C 08 G 18/00 <br> C 08 J 9/02 |

The present search report has been drawn up for all claims

| Place of search | Date of completion of the search | Examiner |
|---|---|---|
| WIEN | 08-06-1983 | MAYER |